# EUROPÄISCHE PATENTSCHRIFT

(11) **EP 2 145 462 B1**
(45) Veröffentlichungstag und Bekanntmachung des Hinweises auf die Patenterteilung: **08.03.2017**
(21) Anmeldenummer: 07724424.2
(22) Anmeldetag: 20.04.2007
(51) Int. Cl.: H04M 3/38, H04M 7/00

(54) **VERFAHREN, ENDGERÄT UND KOMMUNIKATIONSSYSTEM ZUM VERIFIZIEREN VON RUFNUMMERN FÜR DIENSTE ZUMINDEST EINES KOMMUNIKATIONSNETZES**
METHOD, TERMINAL AND COMMUNICATION SYSTEM FOR VERIFYING CALL NUMBERS FOR SERVICES OF AT LEAST ONE COMMUNICATION NETWORK
PROCÉDÉ, TERMINAL ET SYSTÈME DE COMMUNICATION DESTINÉS À VÉRIFIER DES NUMÉROS D'APPEL POUR DES SERVICES D'AU MOINS UN RÉSEAU DE COMMUNICATION

(43) Veröffentlichungstag der Anmeldung: 20.01.2010
(73) Patentinhaber: Gigaset Communications GmbH, 40549 Düsseldorf (DE)
(72) Erfinder: KRUK, Anton, 46499 Hamminkeln (DE); SCHMITZ, Georg, 46414 Rhede (DE)
(74) Vertreter: Michalski, Stefan
(86) Internationale Anmeldenummer: PCT/EP2007/003488
(87) Internationale Veröffentlichungsnummer: WO 2008/128553

(56) Entgegenhaltungen:
- DE-A1- 19 718 103
- GB-A- 2 397 731
- US-A1- 2006 153 346

## Beschreibung

In Kommunikationsnetzen, beispielsweise im PSTN oder im paketorientierten Intranet oder Internet, sind Rufnummern zur Nutzung von Diensten, beispielsweise Voice over IP Dienst, vorgesehen. Vor einer Nutzung muss die Rufnummer beim entsprechenden Dienst subskribiert bzw. verifiziert werden - beispielsweise wird der Dienst nach der verifizierung der Rufnummer für die Rufnummer frei geschaltet. Beispielsweise kann die Nutzung eines Voice over IP Dienstes verifiziert werden, wobei die vorgesehene Rufnummer des Festnetzes bei einem bestimmten Betreiber bzw. Anbieter als SIP- Rufnummer (SIP - Session Initial Protocol) subskribiert wird. Ein weiteres Beispiel ist die Freischaltung einer ENUM Domain in einem Intranet, wobei die ENUM Domain aus der Rufnummer des Festnetzes abgeleitet ist (ENUM - Telephone Number Mapping).

Die Registrierung der Rufnummer bei einem Dienstanbieter oder Betreiber erfolgt derzeit durch eine Eingabe der Rufnummer am Endgerät, beispielsweise ein schnurloses Endgerät oder ein Internet-Telefon in einem Intranet, und anschließender Übertragung der Rufnummer an den Anbieter bzw. Betreiber. Die Rufnummer wird beim Anbieter bzw. Betreiber registriert und bei diesem wird eine Identifikationsinformation gebildet, gespeichert und an das Endgerät übermittelt, wobei die Identifikationsinformation bzw. Identifikationsnummer vom Benutzer des Endgeräts notiert werden muss. Anschließend wird die Verbindung aufgelöst. Um die registrierte Rufnummer zu verifizieren wird das Endgerät von Anbieter des Dienstes angerufen bzw. wird eine Verbindung von dem Anbieter zum Endgerät hergestellt. Daraufhin muss der Benutzer die notierte Identifikationsnummer an der Tastatur des Endgeräts eingeben und die übertragung der Identifikationsnummer an den Anbieter bzw. Betreiber des Dienstes veranlassen. Entspricht die übermittelte Identifikationsnummer der gespeicherten Identifikationsnummer, so ist die registrierte Rufnummer verifiziert.

Die DE 197 18 103 A1 beschreibt ein Verfahren und eine Vorrichtung zur Autorisierung in Datenübertragungssystemen unter Verwendung eines Passwortes, bei denen ein Benutzer das Passwort von einem Empfänger übernimmt und in ein Dateneingabegerät eingibt.

Die GB 2 397 731 A zeigt ein Verfahren und eine Vorrichtung zur Autorisierung einer Zugangsanfrage unter Verwendung von zwei Kommunikationskanälen.

Die US 2006/0153346 beschreibt ein Verfahren zur Verifikation einer Online-Registrierung bei einer Web-Seize über Telefon. Dabei wird ein über Telefon übermittelter Code manuell in einem Maske der Web-Seite oder ein telefonisches Verifikationssystem eingegeben.

Die der Erfindung zugrunde liegende Aufgabe besteht darin, die Verifizierung von bei Anbietern von Diensten zu registrierenden Rufnummern zu verbessern. Die Aufgabe wird durch die Merkmal der Ansprüche 1, 7 und 9 gelöst.

Der wesentliche Aspekt des erfindungsgemäßen Verfahrens ist darin zu sehen, dass nach einer ersten Verbindungssignalisierung von einem Endgerät eine vorgegebene Rufnummer an den Dienst übermittelt und dort gespeichert wird. Im Dienst wird eine endgerätespezifischen Identifikation gebildet, gespeichert und zusammen mit der Rufnummer des Dienstes an das Endgerät übermittelt, dort gespeichert und die erste Verbindung beendet. Im Rahmen einer weiteren Verbindungssignalisierung an das Endgerät wird die Rufnummer des Dienstes übermittelt, worauf im Endgerät nach einer Übereinstimmung der übermittelten mit der gespeicherten Rufnummer die zweite Verbindung angenommen wird. Anschließend wird die gespeicherte, endgerätespezifische Identifikation an den Dienst übermittelt wird, wobei bei einer Ubereinstimmung der übermittelten mit der gebildeten, gespeicherten endgerätespezifischen Identifikation die vorgegebene, gespeicherte Rufnummer im Dienst verifiziert ist. Die Verbindungssignalisierung bzw. Verbindung repräsentiert in paketorientierten Netzwerken die Signalisierung einer Session bzw. eine eingerichtete Session.

Ein wesentlicher Vorteil der Erfindung ist darin zu sehen, dass durch die automatische Verifizierung nach der einmal eingegebenen, vorgegebenen Rufnummer durch die Benutzer der Endgeräte bzw. die Teilnehmer von Kommunikationsnetzen keine Notizen über Identifikationen und weitere Eingabe der notierten Identifikation mehr durchführen müssen. Durch die automatische
Verifizierung ist der Verifizierungsvorgang weniger störanfällig als bei einer manuellen Eingabe der Identifikationen. Auch kann die Verifizierung der eingetragenen Rufnummer, sofern Ressourcen im Dienst oder dem betroffenen Kommunikationsnetz nicht verfügbar sind und/oder hoch belastet sind, zu anderen Zeitpunkten durchgeführt werden, bei denen die Ressource weniger belastet bzw. verfügbar sind.

Weitere vorteilhafte Weiterbildungen des erfindungsgemäßen Verfahrens und eine Ausgestaltung eines erfindungsgemäßen Endgeräts und eines Kommunikationssystems sind den weiteren Ansprüchen zu entnehmen.

Im Folgenden werden die Erfindung und deren Weiterbildungen anhand zweier zeichnerischen Darstellungen näher erläutert. Dabei zeigen
- Figur 1: eine schematische Darstellung eines Kommunikationssystems zur Realisierung des erfindungsgemäßen Verfahrens und
- Figur 2: ein Ablaufdiagramm zur Erläuterung des erfindungsgemäßen Verfahrens.

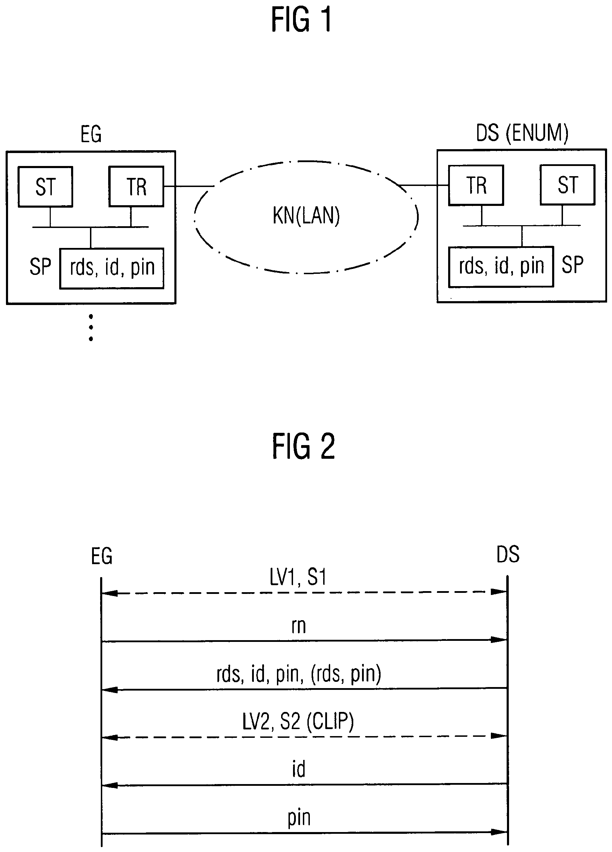

Figur 1 zeigt ein Kommunikationssystem mit einem Dienstserver DS, der an ein drahtgebundenes Kommunikationsnetz KN, im Ausführungsbeispiels ein lokales Netzwerk LAN angeschlossen ist in der Figur 1 durch ein mit KN(LAN) bezeichnetes, strichpunktiertes Oval dargestellt. Alternativ - nicht dargestellt - kann das Kommunikationsnetz KN durch ein PSTN, ein Intranet,
das Internet, ein Mobilfunknetz oder eine Kombination der Netze realisiert sein. An das lokale Netzwerk LAN sind des weiteren Endgeräte EG angeschlossen, wobei in Figur 1 beispielhaft ein Endgerät EG dargestellt ist, mit dem das erfindungsgemäße Verfahren erläutert wird. Die weiteren Endgeräte EG sind durch eine gepunktete Linie angedeutet. Das lokale Netzwerk LAN ist beispielsweise durch ein als Busnetz ausgestaltetes Ethernet realisiert, wobei in derartigen lokalen Netzwerken LAN die Informationsübertragung paketorientiert nach einem Internetprotokoll erfolgt. Für die Übertragung von Sprachinformation über das Internetzprotokoll ist das SIP-Protokoll (SIP Session Initial Protokoll) oder das standardisierte H.323- Protokoll vorgesehen. Endgeräte des lokalen Netzwerks LAN sind folglich Personalcomputer mit und ohne Telefonfunktion und Internet-Telefone.

Das Endgerät EG und der Dienstserver DS sind gleichartig aufgebaut, wobei jeweils ein Programm- und Datenspeicher SP sowie eine Steuerung ST - meist durch einen Prozessor realisiert - und ein Transportmodul TR als Verbindungsglied zum lokalen Netz LAN zum Empfang und Senden von Daten über das lokale Netzwerk LAN vorgesehen ist. Das Transportmodul TR realisiert die physikalische Schicht und Sicherungsschicht zum lokalen Netzwerk, d.h. zum Ethernet- Busnetzwerk. Mit Hilfe der Komponenten des Endgeräts EG und des Dienstservers DS wird das erfindungsgemäße Verfahren realisiert, wobei die Abläufe durch die zentrale Steuerung zusammen mit einem im Programm- und
Datenspeicher gespeicherten Anwenderprogramm gesteuert werden. Die Eingabe- und Ausgabeeinheit wie beispielsweise Tastatur und Anzeigeeinheit des Endgeräts EG und des Dienstservers DS sind nicht dargestellt.

Das erfindungsgemäße Verfahren wird anhand des in Figur 2 dargestellten Ablaufdiagramms und des in Figur 1 dargestellten Kommunikationssystems erläutert. Hierbei ist in Figur 2 das Endgerät EG und der Dienstserver DS jeweils durch eine senkrechte, strichpunktierte Linie angedeutet. Für das Ausführungsbeispiel sei angenommen, dass eine ENUM Domain frei geschaltet werden soll, wobei die ENUM Domain (ENUM - Telephone Numbering Mapping) aus der Festnetznummer abgeleitet wird. Das Protokoll zu ENUM ist im Standard "RFC2916" (E.164 Nummer and DNS) definiert. Um die Telefonnummern in das DNS-System (DNS - Domain Name System) zu überführen, wird eine Telefonnummer
in eine eindeutige Domain verwandelt, wobei eine Domain einen Namen im Internet repräsentiert, die zentral verwaltet werden. Der Dienst ENUM - in der Figur 1 durch die Bezeichnung ENUM angedeutet - ist häufig vorgesehen, da die Benutzer der Endgerät EG in den meisten Fällen ihre Festnetz- Telefonnummer mitnehmen bzw. beibehalten wollen und bei einer Verbindungssignalisierung für Sprachverbindungen über das Intranet oder
Internet diese Festnetznummer in eine ENUM Domain umzuwandeln ist. Es kann ebenso eine Mobilfunknummer in eine ENUM Domain umgewandelt werden.

Um eine ENUM Domain überhaupt nutzen zu können, muss diese erst frei geschaltet werden. Dies wird durch einen Subskribierungs- bzw. Verifizierungsvorgang bewerkstelligt, der zwischen dem Dienstserver DS und dem Endgerät EG durchgeführt wird. Eine derartige Subskribierung ist beispielsweise bei dem Businessbetreiber <http://www.portunity.net/> www.portunity.net möglich. Dieser stellt dann den Dienst ENUM für das registrierte Endgerät EG bzw. für den Benutzer des Endgeräts bereit.

Eingeleitet wird die Verifizierung durch eine eine erste logische Verbindung LV1 aufbauende, von den Steuerungen ST gesteuerte Verbindungssignalisierung vom Endgerät EG zum Dienstserver DS, der den ENUM Dienst anbietet, wobei durch die erste logische Verbindung LV1 eine erste Session S1 repräsentiert ist - in der Figur 2 durch einen mit LV1,S1 bezeichneten
Doppelpfeil angedeutet. Anschließend wird eine vorgegebene Rufnummer rn vom Endgerät EG an den Dienstserver DS über die erste logische Verbindung LV1 übermittelt - in Figur 2 durch den mit rn bezeichneten Pfeil angedeutet. Die Rufnummer rn ist hierbei beispielsweise die E.164 Rufnummer des Endgeräts EG, die beispielsweise vom PSTN übernommen wurde, wobei die Rufnummer rn im Endgerät EG gespeichert sein kann und vom Speicher - nicht dargestellt - übertragen wird oder durch eine Eingabe an der Tastatur des Endgeräts im Endgerät EG gebildet und übertragen wird.

Daraufhin wird im Dienstserver DS aus dem Speicher SP mit Hilfe der Steuerung ST seine Server-Rufnummer rds gelesen und mit Hilfe der Transporteinheit TR über die erste logische Verbindung LV1 über das lokale Netzwerk LAN an das Endgerät EG übertragen. Zusammen mit der Server-Rufnummer rds wird eine endgrätespezifische und eine ebenfalls aus dem Speicher SP gelesene, dienstspezifische Identifikation pin,id übertragen - in Figur 2 durch einen mit rds, id, pin bezeichneten Pfeil angedeutet. Die endgerätespezifische Identifikation pin wird für jedes Endgerät EG separat vergeben und mit der dienstspezifischen Identifikation id wird der Dienst spezifiziert - beim Ausführungsbeispiel der ENUM Dienst.

Im Endgerät EG werden die übermittelte Server-Rufnummer rds sowie die endgeräte- und dienstspezifische Identifikation pin,id vom Transportmodul TR empfangen über die Steuerung ST im Speicher SP gespeichert - Figur 1. Anschließend wird die erste logische Verbindung LV1 zwischen Endgerät EG und Dienstserver DS mit Hilfe der Transportmodule TR ausgelöst. Sofort oder nach einer ausgewählten Zeitspanne wird vom Dienstserver DS eine eine zweite logische Verbindung LV2 aufbauende Verbindungssignalisierung vom Dienstserver DS zum Endgerät EG eingeleitet, wobei die zweite logische Verbindung LV2 auch eine zweite Session S2 repräsentiert - in Figur 2 durch
einen gestrichelten und mit LV2,S2 bezeichneten Doppelpfeil angedeutet. Im Rahmen der Verbindungssignalisierung wird die Rufnummer rds des Dienstservers DS als CLIP (CLIP Calling Line Identification Presentation) übermittelt.

Die Zeitspanne zwischen dem Auslösen der ersten logischen Verbindung LV1 und der Verbindungssignalisierung für die zweite logische Verbindung kann frei gewählt werden oder von Kriterien abhängig sein. Beispielsweise bei einem überlasteten lokalen Netz LAN oder dem Dienstserver DS kann eine Zeitspanne gewählt werden, nach der das lokale Netz oder der Dienstserver DS weniger belastet ist. Für eine umgehende Nutzung eines Dienstes ist eine schnelle Subskribierung vorteilhaft.

Im Endgerät EG wird mit Hilfe der Steuerung ST die im Speicher SP gespeicherte Rufnummer rds mit der übermittelten Rufnummer rds verglichen und bei Übereinstimmung wird der signalisierte Anruf automatisch angenommen, d.h. die zweite logische Verbindung LV2 mit dem Dienstserver DS hergestellt. Sollte eine Übertragung einer CLIP nicht möglich sein - beispielsweise in
einem analogen Telefonnetz -, so kann der Anruf auch durch den Benutzer beispielsweise durch Abheben des Hörers angenommen werden.

Nachdem die zweite logische Verbindung LV2 hergestellt ist, wird im Dienstserver DS mit Hilfe der Steuerung ST die dienstspezifische Identifikation id aus dem Speicher SP gelesen und über das Transportmodul TR an das Endgerät EG übermittelt. Im Endgerät EG wird die empfangene dienstgerätespezifische Identifikation id mit Hilfe der Steuerung auf Übereinstimmung mit der im Speicher SP gespeicherten dienstgerätespezifischen Identifikation id überprüft. Bei einer Übereinstimmung wird die im Speicher SP gespeicherte endgerätespezifische Identifikation pin ausgelesen und über das Transportmodul TR und das lokale Netzwerk LAN an den Dienstserver DS übermittelt. In diesem wird mit Hilfe der Steuerung ST die im Speicher SP enthaltene endgerätespezifische Identifikation pin mit der empfangenen endgrätespezifischen Identifikation pin verglichen und bei Übereinstimmung ist die Rufnummer rn für den ENUM Dienst verifiziert. Anschließend kann beispielsweise der Dienst in Anspruch genommen werden.

Bei einer einfacheren Variante der Erfindung wird keine dienstspezifische Identifikation id nach der ersten Verbindungssignalisierung vom Dienstserver DS an das Endgerät EG übertragen - in Figur 2 durch die Bezeichnung (rds,id) angedeutet. Es wird nur die endgerätespezifische Identifikation (pin) übertragen und im Endgerät EG gespeichert. Im Rahmen der zweiten
Verbindungssignalisierung wird die CLIP vom Dienstserver DS an das Endgerät EG übertragen. Nach dem Erkennen der CLIP im Endgerät EG und der Annahme des Anrufs wird bei dieser Variante keine dienstspezifische Identifikation id vom Dienstserver DS and das Endgerät EG übermittelt, sondern sofort die gespeicherte endgerätespezifische Identifikation pin vom Endgerät EG an den Dienstserver DS übermittelt - in Figur 2 durch die Bezeichnung (id) angedeutet. Im Dienstserver DS ist bei Feststellen der Übereinstimmung der übermittelten mit der gespeicherten endgerätespezifischen Identifikation pin die Rufnummer rn für den ENUM Dienst verifiziert.

Das erfindungsgemäße Verfahren ist nicht auf das Ausführungsbeispiel beschränkt, sondern kann bei allen Diensten in unterschiedlichen Netzen verwendet werden, deren Rufnummern zu subskribieren bzw. zu verifizieren sind - beispielsweise bei der Subskribierung einer Festnetzrufnummer als SIP- Rufnummer. Hierbei sind die Komponenten und Übertragungseinheiten der
Endgeräte EG und der Server oder anderer Diensteinrichtungen auf die jeweiligen Kommunikationsnetze und Übertragungsverfahren abzustimmen.

## Patentansprüche

1. Verfahren zum Verifizieren von Rufnummern für Dienste zumindest eines Kommunikationsnetzes,
a) bei dem nach einer eine erste Verbindung (LV1) aufbauenden ersten Verbindungssignalisierung von einem Endgerät (EG) zu einem Dienstserver (DS) des Dienstes von dem Endgerät (EG) über die erste logische Verbindung (LV1) eine vorgegebene Rufnummer (rn) an den Dienst übermittelt und dort gespeichert wird,
b) bei dem im Dienst eine endgerätespezifische Identifikation (pin) gebildet, gespeichert und zusammen mit der Rufnummer (rds) des Dienstes an das Endgerät (EG) übermittelt sowie dort gespeichert und die erste Verbindung (LV1,S1) beendet wird,
c) bei dem im Rahmen einer eine zweite Verbindung (LV2) aufbauenden zweiten Verbindungssignalisierung vom Dienstserver (DS) an das Endgerät (EG) die Rufnummer (rds) des Dienstes übermittelt wird, worauf im Endgerät (EG) nach einer Übereinstimmung der übermittelten mit der gespeicherten Rufnummer (rds) die zweite Verbindung (LV2,S2) angenommen wird, und
d) bei dem vom Endgerät (EG) die gespeicherte, endgerätespezifische Identifikation (pin) an den Dienst übermittelt wird, wobei bei einer Übereinstimmung der übermittelten mit der gebildeten, gespeicherten endgerätespezifischen Identifikation (pin) die vorgegebene, gespeicherte Rufnummer (rn) im Dienst verifiziert ist.

2. Verfahren nach Anspruch 1,
**dadurch gekennzeichnet,**
- **dass** bei mehreren Diensten für ein Endgerät (EG) nach der ersten Verbindungssignalisierung zusätzlich eine dienstspezifische Identifikation (id) im Dienst gebildet, an das Endgerät (EG) übermittelt und dort gespeichert wird,
- **dass** nach Annahme des Anrufs vom Dienst die dienstgerätespezifische Identifikation (id) erneut an das Endgerät übermittelt wird, und
- **dass** im Endgerät (EG) nach dem Feststellen der Übereinstimmung der übermittelten mit der gespeicherten, dienstspezifischen Identifikation (id), die gespeicherte, endgerätespezifische Identifikation (pin) an den Dienst übermittelt wird.

3. Verfahren nach Anspruch 1 oder 2,
**dadurch gekennzeichnet**,
das bei einem Dienst in einem paketorientierten Kommunikationsnetz
- die Rufnummern (rn,rds) durch eine E.164 Rufnummer, eine SIP- oder H.323- Identifikation repräsentiert sind, und
- eine Verbindungssignalisierung im Rahmen eines Aufbaus einer virtuellen Verbindung (VL) und/oder Session (S) zwischen Endgerät (EG) und Dienst erfolgt.

4. Verfahren nach einem der vorhergehenden Ansprüche,
**dadurch gekennzeichnet,**
- **dass** bei einem Dienst in einem analogen oder ISDN- Kommunikationsnetz die Rufnummern (rn,rds) durch eine E.164 Rufnummer repräsentiert sind, wobei die Rufnummern (rn,rds) in einem analogen Kommunikationsnetz durch MFC- Zeichen und im ISDN-Kommunikationsnetz im Signalisierungs- und Nutzkanal übermittelt werden, und
- **dass** eine Verbindungssignalisierung den Aufbau einer Verbindung zwischen dem Endgerät (EG) und dem Dienst repräsentiert und eine Verbindung eine zwischen Endgerät (EG) und Dienst geschaltete Verbindung repräsentiert.

5. Verfahren einem der vorhergehenden Ansprüche,
**dadurch gekennzeichnet,**
**dass** der Dienst durch einen Dienst in einem drahtgebundenen oder drahtlosen Kommunikationsnetz und/oder in einem paketorientierten Kommunikationsnetz repräsentiert ist.

6. Verfahren nach Anspruch 5,
**dadurch gekennzeichnet,**
**dass** ein paketorientierten Kommunikationsnetz durch ein Intranet oder das Internet und optional mit SIP- oder H.323- Protokoll repräsentiert ist, wobei im Dienst ein Dienstserver (DS) vorgesehen ist.

7. Endgerät für das Verifizieren von Rufnummern für Dienste zumindest eines Kommunikationsnetzes,
mit einer Steuereinrichtung (ST) und einem Transportmodul (TR)
- zum Übermitteln einer vorgegebenen Rufnummer (rn) an einen Dienstserver (DS) des Dienstes über eine erste logische Verbindung (LV1) nach einer diese erste Verbindung (LV1) aufbauenden ersten Verbindungssignalisierung von dem Endgerät (EG) zu dem Dienstserver (DS) und zum Beenden der ersten Verbindung (LV1,S1), wobei die vorgegebene Rufnummer (rn) im Dienstserver (DS) gespeichert und eine endgerätespezifische Identifikation (pin) gebildet, gespeichert und zusammen mit der Rufnummer (rds) des Dienstservers (DS) an das Endgerät (EG) übermittelt wird,
- zur Annahme einer zweiten Verbindung (LV2,S2) nach einer Übereinstimmung einer im Rahmen einer diese zweite Verbindung (LV2) aufbauenden zweiten Verbindungssignalisierung vom Dienstserver (DS) an das Endgerät (EG) übermittelten Rufnummer (rds) des Dienstservers (DS) mit der gespeicherten Rufnummer (rds), und
- zum Übermitteln der gespeicherten, endgerätespezifische Identifikation (pin) an den Dienstserver (DS) nach der zweiten Verbindungssignalisierung, wobei bei einer Übereinstimmung der übermittelten mit der gespeicherten endgerätespezifischen Identifikation (id) die vorgegebene, gespeicherte Rufnummer (rn) im Dienstserver (DS) verifiziert ist.

8. Endgerät nach Anspruch 7,
**dadurch gekennzeichnet,**
**dass** die Steuereinrichtung (TR) und das Transportmodul (TR) derart ausgestaltet sind,
- **dass** bei mehreren Diensten für ein Endgerät (EG) nach der ersten Verbindungssignalisierung zusätzlich eine im Dienstserver (DS) gebildete und an das Endgerät (EG) übermittelte dienstspezifische Identifikation (id)empfangen und gespeichert wird,
- **dass** nach der zweiten Verbindungssignalisierung die erneut vom Dienstübermittelte dienstspezifische Identifikation (id) empfangen wird, und
- **dass** nach einer Überstimmung der gespeicherten und der erneut übermittelten dienstspezifischen Identifikation (id) die gespeicherte, engerätespezifische Identifikation (pin) an den Dienst übermittelt wird.

9. Kommunikationssystem für das Verifizieren von Rufnummern für Dienste zumindest eines Kommunikationsnetzes,
mit einem Endgerät (EG) und einem Dienstserver (DS) zum Durchführen der Verfahrenschritte nach einem der Ansprüche 1 bis 6.

## Claims

1. Method for verifying call numbers for services of at least one communication network,
a) in which after a first connection signalling from a terminal (EG) to a service server (DS) of the service, which establishes a first connection (LV1) a specified call number (m) is transmitted over the first logical connection (LV1) by the terminal (EG) to the service and stored there,
b) in which in the service a terminal-specific identification (pin) is generated stored and transmitted together with the call number (rds) of the service to the terminal (EG) and stored there, and the first connection (LV1,S1) is terminated,
c) in which as part of a second connection signalling from the service server (DS) to the terminal (EG), which establishes a second connection (LV2), the call number (rds) of the service is transmitted, whereupon following a match between the transmitted and the stored call number (rds), the second connection (LV2,S2) is accepted in the terminal (EG), and
d) in which the stored, terminal-specific identification (pin) is transmitted from the terminal (EG) to the service, wherein in the event of a match between the transmitted and the generated, stored terminal-specific identification (pin), the pre-defined stored call number (rn) is verified in the service.

2. Method according to Claim 1,
**characterized in that**
- in the case of a plurality of services for one terminal (EG), after the first connection signalling, a service-specific identification (id) is additionally generated in the service, transmitted to the terminal device (EG) and stored there,
- that following acceptance of the call by the service, the service-specific identification (id) is again transmitted to the terminal, and
- that in the terminal (EG), after determining the match between the transmitted and the stored, service-specific identification (id), the stored, terminal-specific identification (pin) is transmitted to the service.

3. Method according to Claim 1 or 2,
**characterized in that**
in the case of a service in a packet-oriented communication network
- the call numbers (rn,rds) are represented by an E.164 number, a SIP or H.323 identification, and
- a connection signalling takes place as part of the establishment of a virtual connection (VL) and/or session (S) between terminal (EG) and service.

4. Method according to one of the previous claims,
**characterized**
**in that** in the case of a service in an analogue or ISDN communication network, the call numbers (rn,rds) are represented by an E.164 number, wherein the call numbers (rn,rds) in an analogue communication network are transmitted by means of MFC symbols and in the ISDN communication network in the signalling and user channel, and
- **in that** a connection signalling represents the establishment of a connection between the terminal (EG) and the service and a connection represents a connection that is switched between terminal (EG) and service.

5. Method according to one of the previous claims,
**characterized in that**
the service is represented by a service in a wired or wireless communication network and/or in a packet-oriented communication network.

6. Method according to Claim 5,
**characterized in that**
a packet-oriented communication network is represented by an intranet or the internet and optionally with SIP or H.323 protocol, wherein a service server (DS) is provided in the service.

7. Terminal for the verification of call numbers for services of at least one communication network,
having a control device (ST) and a transport module (TR)
- for transmitting a pre-defined call number (rn) to a service server (DS) of the service over a first logical connection (LV1) after a first connection signalling from the terminal (EG) to the service server (DS), which establishes this first connection (LV1), and for terminating the first connection (LV1,S1), wherein the pre-defined call number (rn) is stored in the service server (DS) and a terminal-specific identification (pin) is generated, stored and transmitted together with the call number (rds) of the service server (DS) to the terminal (EG),
- for accepting a second connection (LV2,S2) following a match between a call number (rds) of the service server (DS), transmitted as part of a second connection signalling from the service server (DS) to the terminal (EG), which establishes this second connection (LV2), and the stored call number (rds), and
- for transmitting the stored, terminal-specific identification (pin) to the service server (DS) after the second connection signalling, wherein in the event of a match between the transmitted and the stored terminal-specific identification (id) the pre-defined, stored call number (rn) is verified in the service server (DS).

8. Terminal according to Claim 7,
**characterized in that**
the control device (TR) and the transport module (TR) are designed in such a way
- that in the case of a plurality of services for a terminal (EG), after the first connection signalling a service-specific identification (id), which is generated in the service server (DS) and transmitted to the terminal (EG), is additionally received and stored,
- that after the second connection signalling the service-specific identification (id) which is re-transmitted by the service is received, and
- that following a match between the stored and the re-transmitted service-specific identification (id) the stored, terminal-specific identification (pin) is transmitted to the service.

9. Communication system for verifying call numbers for services of at least one communication network,
having a terminal (EG) and a service server (DS) for carrying out the method steps in accordance with one of Claims 1 to 6.

## Revendications

1. Procédé de vérification de numéros d'appel pour des services d'au moins d'un réseau de communication,
a) dans lequel après une première signalisation de liaison établissant une première liaison (LV1) depuis un terminal (EG) vers un serveur de service (DS) du service par le terminal (EG) par l'intermédiaire de la première liaison logique (LV1) un numéro d'appel prescrit (rn) est transmis au service et stocké à cet endroit,
b) dans lequel dans le service une identification spécifique au terminal (pin) est formée, stockée et transmise conjointement au numéro d'appel (rds) du service au terminal (EG) ainsi que stockée à cet endroit et la première liaison (LV1,S1) est terminée,
c) dans lequel dans le cadre d'une deuxième signalisation de liaison établissant une deuxième liaison (LV2) du serveur de service (DS) au terminal (EG) le numéro d'appel (rds) du service est déterminé, après quoi dans le terminal (EG) la deuxième liaison (LV2,S2) est acceptée après une concordance du numéro d'appel déterminé avec le numéro d'appel stocké (rds), et
d) dans lequel l'identification (pin) spécifique au terminal, stockée est transmise à partir du terminal (EG) au service, dans lequel lors d'une concordance de l'identification déterminée avec l'identification spécifique au terminal stockée, formée le numéro d'appel (rn) stocké prescrit est vérifié dans le service.

2. Procédé selon la revendication 1, **caractérisé en ce que**
- en présence de plusieurs services pour un terminal (EG) après la première signalisation de liaison, une identification spécifique au service (id) est en outre formée dans le service, transmise au terminal (EG) et y est stockée,
- après l'acceptation de l'appel par le service l'identification spécifique au service (id) est de nouveau transmise au terminal, et
- dans le terminal (EG) après la détermination de la concordance de l'identification transmise avec l'identification spécifique au service, stockée (id), l'identification spécifique au terminal, stockée (pin) est transmise au service.

3. Procédé selon la revendication 1 ou 2, **caractérisé en ce que** dans le cas d'un service dans un réseau de communication orienté paquets
- les numéros d'appel (rn,rds) sont représentés par un numéro d'appel E.164, une identification SIP ou H.323, et
- une signalisation de liaison dans le cadre de l'établissement d'une liaison virtuelle (VL) et/ou session (S) entre le terminal (EG) et le service a lieu.

4. Procédé selon une des revendications précédentes, **caractérisé en ce que**
- dans le cas d'un service dans un réseau de communication analogique ou ISDN les numéros d'appel (rn, rds) sont représentés par un numéro d'appel E.164, dans lequel les numéros d'appel (rn,rds) sont transmis dans un réseau de communication analogique par des symboles MFC et dans le réseau de communication ISDN dans le canal de signalisation et canal utile, et
- une signalisation de liaison représente l'établissement d'une liaison entre le terminal (EG) et le service et une liaison représente une liaison branchée entre le terminal (EG) et le service.

5. Procédé selon une des revendications précédentes, **caractérisé en ce que** le service est représenté par un service dans un réseau de communication câblé ou sans fil et/ou dans un réseau de communication orienté paquet.

6. Procédé selon la revendication 5, **caractérisé en ce que** un réseau de communication orienté paquet est représenté par un Intranet ou l'Internet et optionnellement avec un protocole SIP ou H.323, dans lequel dans le service un serveur de service (DS) est prévu.

7. Terminal pour vérifier des numéros d'appel pour des services d'au moins un réseau de communication, comportant un dispositif de commande (ST) et un module de transport (TR),
- pour transmettre un numéro d'appel (rn) prescrit à un serveur de service (DS) du service par l'intermédiaire d'une première liaison logique (LV1) après une première signalisation de liaison établissant cette première liaison (LV1) depuis un terminal (EG) vers le serveur de service (DS) et pour mettre fin à la première liaison (LV1,S1), dans lequel le numéro d'appel prescrit (rn) est stocké dans le serveur de service (DS) et une identification spécifique au terminal (pin) est formée, stockée est transmise conjointement au numéro d'appel (rn) du serveur de service (DS) au terminal (EG),
- pour accepter une deuxième liaison (LV2,S2) après une concordance d'un numéro d'appel (rds) transmis du serveur de service (DS) au terminal (EG) dans le cadre d'une deuxième signalisation de liaison établissant cette deuxième liaison (LV2) avec le numéro d'appel stocké (rds), et
- pour transmettre l'identification spécifique au terminal (pin), stockée au serveur de service (DS) après la deuxième signalisation de liaison, dans lequel en cas d'une concordance de l'identification déterminée avec l'identification spécifique au terminal stockée (id), le numéro d'appel stocké (rn), prescrit est vérifié dans le serveur de service (DS).

8. Terminal selon la revendication 7, **caractérisé en ce que** le dispositif de commande (TR) et le module de transport (TR) sont conçus de telle sorte que
- en présence de plusieurs services pour un terminal (EG) après la première signalisation de liaison, une identification spécifique au service (id) formée dans le serveur service (DS) et transmise au terminal (EG) est en outre reçue et stockée,
- après la deuxième signalisation de liaison l'identification spécifique au service (id) de nouveau transmise par le service est reçue, et
- après une concordance de l'identification spécifique au service (id) stockée et de nouveau transmise, l'identification spécifique au terminal (pin), stockée est transmise au service.

9. Système de communication pour la vérification de numéros d'appel pour des services d'au moins un réseau de communication, comportant un terminal (EG) et un serveur de service (DS) pour mettre en oeuvre les étapes de procédé selon une des revendications 1 à 6.
